# EUROPÄISCHE PATENTANMELDUNG

(11) **EP 2 808 496 A1**
(43) Veröffentlichungstag der Anmeldung: **03.12.2014**
(21) Anmeldenummer: 13169385.5
(22) Anmeldetag: 27.05.2013
(51) Int. Cl.: F01D 19/00, F01K 23/10, F02C 6/18

(54) **GuD- Kraftwerk mit Anfahrumrichter**

(71) Anmelder: Siemens Aktiengesellschaft, 80333 München (DE)
(72) Erfinder: Bennauer, Martin, 46242 Bottrop (DE); Migl, Matthias, 80997 München (DE); Rosendahl, Jens, Dr., 40470 Duesseldorf (DE)

(57) **Zusammenfassung**

Die Erfindung betrifft eine Anlage (1) umfassend eine Gasturbine und eine Dampfturbine, wobei die Gasturbine beim Start mit einem Generator (2) über einen Anfahrumrichter (10) hochgefahren wird und nach dem Hochfahren für die Dampfturbine als Last über den Generator (3) wirkt und somit die Anwärmzeit verkürzt.

## Beschreibung

Die Erfindung betrifft ein Verfahren zum Anfahren einer Anlage umfassend eine Gasturbine und eine Dampfturbine, wobei zunächst die Gasturbine von einem Generator über einen Anfahrumrichter hochgefahren wird.

Des Weiteren betrifft die Erfindung eine Anlage umfassend eine Gasturbine und eine Dampfturbine und einen Anfahrumrichter.

In heutigen Kraftwerksanlagen, insbesondere in GuD-Kraftwerken ist es wichtig, dass elektrische Energie schnell zur Verfügung gestellt werden kann. Die Zeit, in der elektrische Energie zur Verfügung gestellt werden kann, hängt davon ab, wie schnell die Gasturbine und die Dampfturbine aus einem nicht betriebsbereiten kalten Zustand in einen betriebsbereiten heißen Zustand geändert werden kann. Es ist so, dass durch unzureichende Durchströmung beim Anfahren einer Dampfturbine z.B. bei einem Kaltstart sich die Durchwärmzeiten erhöhen und dadurch die minimal erreichbaren Kaltstartzeiten der Dampfturbine verlängern, was ebenfalls die Gesamtstartzeit der Gas- und Dampfturbinenanlage verlängert. Des Weiteren beträgt die Auslaufzeit moderner hocheffizienter Dampfturbinen bis zu 90 Minuten bei entsprechend geringen Kondensatordrücken. Des Weiteren wird während des Anfahrens und des Abfahrens der von der Gasturbine bzw. Abhitzedampferzeuger erzeugte Dampf in den Kondensator geleitet und steht somit der effizienten Energieerzeugung nicht zur Verfügung.

Um dieses Problem zu bewältigen wurde bisher vorgesehen, einen höheren Kondensatordruck zu fahren, um mehr Bremswirkung über die Niederdruckbeschaufelung einer Dampfturbine zu erhalten. Dies hatte allerdings den Nachteil, dass ein mehrmaliges Öffnen des Vakuumbrechers zu Schaufelschwingungen der Niederdruckschaufeln führt. Des Weiteren wird durch Falschlufteintrag in die Vakuumpumpen die Wasserchemie verschlechtert.

Die Dampfturbine muss erst Betriebstemperatur erreichen, bevor sie auf Nenndrehzahl gefahren und mit dem elektrischen Verbrauchernetz synchronisiert werden kann. Dies geschieht auf Anwärmdrehzahl ohne Belastung, was ineffizient ist. Eine Belastung während der Anwärmzeit ist bisher ohne Weiteres nicht möglich.

Es ist daher Aufgabe der Erfindung, ein Verfahren und eine Anlage anzugeben, mit der die Anwärmzeit einer Dampfturbine verkürzt werden kann. Gelöst wird diese Aufgabe durch ein Verfahren zum Anfahren einer Anlage umfassend eine Gasturbine und eine Dampfturbine, wobei zunächst die Gasturbine von einem Generator über einen Anfahrumrichter hochgefahren wird, wobei der Anfahrumrichter nach Beendigung des Hochfahrens der Gasturbine beim An- und Abfahren der Dampfturbine als Last über den Generator verwendet wird.

Die Gasturbine einer Mehrwellenanlage wird beim Start vom Generator über einen Anfahrumrichter hochgefahren. Sobald die Gasturbine mit dem Netz synchronisiert und verbunden ist, wird der Anfahrumrichter nicht mehr verwendet und steht im Grunde zur Verfügung. Erfindungsgemäß wird nun vorgeschlagen, diesen Anfahrumrichter nun schon beim An- und Abfahren im drehzahlvariablen Betrieb der Dampfturbine als Bremse bzw. als selektive Last zu verwenden. Der Generator der Dampfturbine wird über einen Schalter mit dem Anfahrumrichter verbunden. Sobald die Gasturbine vom Anfahrumrichter getrennt ist, kann die Dampfturbine bei nahezu beliebiger Drehzahl zugeschaltet werden.

Somit entsteht der Vorteil, dass während der Aufwärmphase der Dampfturbine der Anfahrumrichter verwendet werden kann, um den Generator der Dampfturbine zu belasten. Das höhere Bremsmoment führt beim Anfahren der Dampfturbine zu einem weiteren Öffnen der Regelventile und somit zu einem höheren Massendurchsatz durch die Teilturbinen und damit zu einem wesentlich höheren Wärmeübergang. Die Anwärmzeit könnte dadurch wesentlich reduziert werden. Beim Auslaufen der Dampfturbine nach einem Schnellschluss führt das Verwenden des Anfahrumrichters zu einer deutlich reduzierten Auslaufzeit der Dampfturbine. Dies stellt für die Niederdruckbeschaufelung eine schonende Fahrweise dar, da die Bremswirkung über die Dampfturbinenwelle stattfindet. Der Generator der Dampfturbine kann sowohl im niedrigen Drehzahlbereich als auch nach einem Lastabwurf bzw. Dampfturbinenschnellschluss Leistung ins elektrische Netz einspeisen. Damit erhöht sich der Anfahrwirkungsgrad bzw. der Abfahrwirkungsgrad der GuD-Gesamtanlage.

Vorteilhafte Weiterbildungen sind in den Unteransprüchen angegeben.

In einer vorteilhaften Weiterbildung werden ein erster Generator für die Gasturbine und ein zweiter Generator für die Dampfturbine verwendet. Somit wird das erfindungsgemäße Verfahren bei Mehrwellenanlagen mit zwei oder mehr Generatoren eingesetzt.

In einer vorteilhaften Weiterbildung wird die Gasturbine mit einem elektrischen Netz synchronisiert und verbunden und danach wird der Umrichter als Last für den Generator der Dampfturbine verwendet. Durch diese Maßnahme lässt sich die Anwärmzeit deutlich verkürzen.

In einer vorteilhaften Weiterbildung wird der Anfahrumrichter als Last für den Generator während der Aufwärmphase der Dampfturbine verwendet.

Die Aufgabe wird ebenso durch eine Anlage umfassend eine Gasturbine und eine Dampfturbine und einen Anfahrumrichter gelöst, wobei ein elektrischer Generator mit dem Anfahrumrichter über eine Umschaltvorrichtung mit der Gasturbine verbunden ist und die Umschaltvorrichtung derart ausgebildet ist, dass der Anfahrumrichter mit einem zweiten Generator gekoppelt ist und der zweite Generator als Last für die Dampfturbine einsetzbar ist.

Die Erfindung wird nun anhand eines Ausführungsbeispiels näher erläutert.

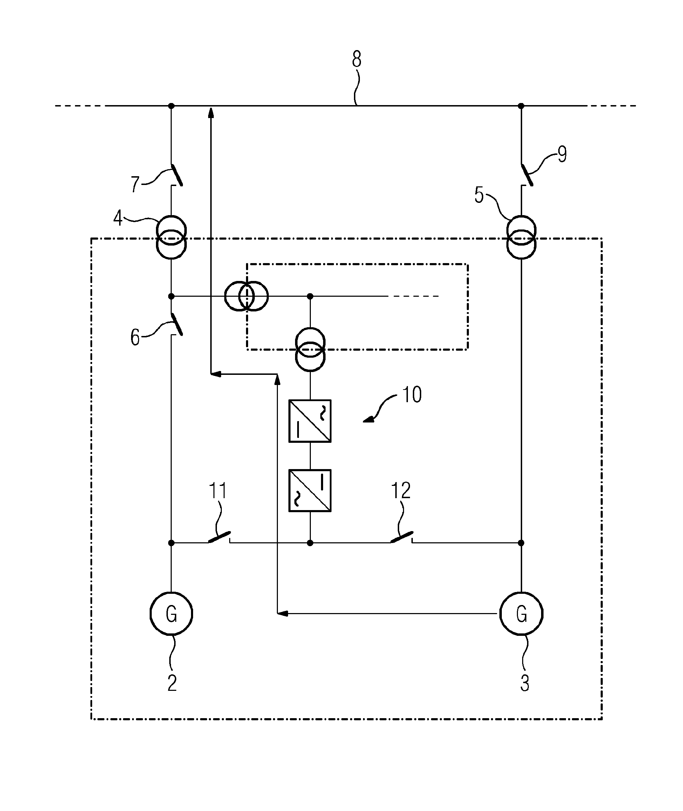

Die Figur zeigt in schematischer Weise das Erfindungsprinzip.

Die Figur zeigt eine erfindungsgemäße Anlage 1 in schematischer Weise. Ein erster Generator 2 wird von einer Gasturbine (nicht dargestellt) angetrieben. Ein zweiter Generator 3 wird von einer Dampfturbine (nicht dargestellt) angetrieben. Der erste Generator 2 ist mit einem ersten Transformator 4 verbunden. Der zweite Generator 3 ist mit einem zweiten Transformator 5 verbunden. Über einen Schalter 6 ist der erste Generator 2 mit dem ersten Transformator 4 verbunden. Über einen Schalter 7 ist der erste Transformator 4 mit dem elektrischen Netz 8 verbunden. Über einen Schalter 9 ist der zweite Transformator 5 mit dem elektrischen Netz 8 verbunden. Ein Anfahrumrichter 10 kann über einen Schalter 11 an den ersten Generator 2 oder über einen Schalter 12 an den zweiten Generator 3 angeschlossen werden.

Das Verfahren zum Anfahren der Anlage 1 umfasst somit eine Gasturbine und eine Dampfturbine, wobei zunächst die Gasturbine von dem ersten Generator 2 über den Anfahrumrichter 10 hochgefahren wird, wobei der Anfahrumrichter 10 nach Beendigung des Hochfahrens der Gasturbine beim An- und Abfahren der Dampfturbine als Last über den zweiten Generator 3 verwendet wird.

Vorgesehen ist somit eine Umschaltvorrichtung, wobei der elektrische Generator 2 mit dem Anfahrumrichter 10 über die Umschaltvorrichtung mit der Gasturbine verbunden ist und die Umschaltvorrichtung derart ausgebildet ist, dass der Anfahrumrichter 10 mit dem zweiten Generator 3 gekoppelt ist und der zweite Generator 3 als Last für die Dampfturbine einsetzbar ist. Wird somit dieser Anfahrumrichter 10 mit den Ableitungen des zweiten Generators 3 verbunden, kann dieser Leistung der Dampfturbine entnehmen und an das Netz abgeben. Eine Neuauslegung der Drosseln und des Transformators des Anfahrumrichters 10 ist ohne Weiteres möglich, um die Betriebszeit zu verlängern. Z.B. würde die Last bei Anwärmdrehzahl um mindestens den Faktor 5 erhöht werden. Sofern die Mehrwellenanlage zwei oder mehr Gasturbinen umfasst und die zweite Gasturbine ebenfalls einen Anfahrumrichter hat, würde sich der Faktor auf 10 verdoppeln.

In einem Verfahrensschritt wird die Gasturbine mit dem elektrischen Netz 8 synchronisiert und verbunden und danach wird der Anfahrumrichter 10 als Last für den Generator 3 der Dampfturbine verwendet.

## Patentansprüche

1. Verfahren zum Anfahren einer Anlage (1) umfassend eine Gasturbine und
eine Dampfturbine,
wobei zunächst die Gasturbine von einem Generator (2) über einen Anfahrumrichter (10) hochgefahren wird,
wobei der Anfahrumrichter (10) nach Beendigung des Hochfahrens der Gasturbine beim An- und Abfahren der Dampfturbine als Last über den Generator (3) verwendet wird.

2. Verfahren nach Anspruch 1,
wobei ein erster Generator (2) für die Dampfturbine verwendet wird.

3. Verfahren nach Anspruch 1 oder 2,
wobei die Gasturbine mit einem elektrischen Netz (8) synchronisiert und verbunden wird und danach als Last für den Generator (3) für die Dampfturbine verwendet wird.

4. Verfahren nach einem der vorhergehenden Ansprüche,
wobei der Anfahrumrichter (10) als Last für den Generator (3) während der Aufwärmphase der Dampfturbine verwendet wird.

5. Anlage (1) umfassend
eine Gasturbine,
eine Dampfturbine und
einen Anfahrumrichter (10),
wobei ein elektrischer Generator (2) mit dem Anfahrumrichter über eine Umschaltvorrichtung derart ausgebildet ist, dass der Anfahrumrichter mit einem zweiten Generator (3) gekoppelt ist und der zweite Generator (3) als Last für die Dampfturbine einsetzbar ist.
